Europäisches Patentamt

European Patent Office

Office européen des brevets

(11) Publication number: **0 024 373**
**B2**

# (12) NEW EUROPEAN PATENT SPECIFICATION

(45) Date of publication of the new patent
specification: **21.06.89**

(21) Application number: **80302684.8**

(22) Date of filing: **06.08.80**

(51) Int. Cl.⁴: **B 62 M 7/06,** F 02 B 61/02

(54) **Motorized two-wheeled vehicle power transmission casings.**

(30) Priority: **21.08.79 JP 105543/79**

(43) Date of publication of application:
**04.03.81 Bulletin 81/09**

(45) Publication of the grant of the patent:
**15.08.84 Bulletin 84/33**

(45) Mention of the opposition decision:
**21.06.89 Bulletin 89/25**

(84) Designated Contracting States:
**BE DE FR GB**

(56) References cited:
**DE-A-1 036 083**
**FR-A-1 560 646**
**FR-A-2 284 511**
**FR-A-2 335 395**
**FR-A-2 353 432**
**FR-A-2 457 210**
**GB-A- 876 499**

**RADMARKT, Vol. 78 No. 12, 15 Dec. 1967**

(73) Proprietor: **HONDA GIKEN KOGYO KABUSHIKI
KAISHA
27-8, Jingumae, 6-chome
Shibuya-ku, Tokyo 150 (JP)**

(72) Inventor: **Kurata, Noboru
646, Komabayashi
Kamifukuoka-shi Saitama-ken (JP)**
Inventor: **Miyazaki, Kunio
1292-27 Musashino Oi-machi
Iruma-gun Saitama-ken (JP)**
Inventor: **Yamamoto, Kuniyuki
1-763-70 Ogawa-machi Kodaira-shi
Tokyo (JP)**

(74) Representative: **MacFarlane, John Anthony
Christopher et al
HASELTINE LAKE & CO. Hazlitt House 28,
Southampton Buildings Chancery Lane
London WC2A 1AT (GB)**

EP 0 024 373 B2

Courier Press, Leamington Spa, England.

## Description

This invention relates to power transmission casings of motorized two-wheeled vehicles such as motorcycles. Throughout the following terms such as "front" and "forwardly" are used with regard to the direction of forward running of the vehicle.

It is known to utilise in a motorized two-wheeled vehicle a V-belt transmission for transmitting the output of the driving internal combustion engine to the driven rear ground wheel located to the rear of the engine. A V-belt transmission is advantageous because there is a comparatively large distance between the output shaft of the engine and the axle of the rear wheel. It is necessary however, to provide a reduction gear mechanism for reducing the rotational speed of the output shaft because it is comparatively high, and additionally it is preferable that this reduction gear mechanism be located at the rear wheel end of the V-belt transmission inboard of the V-belt transmission. French Patent Specification No. 2 353 432 discloses a motorized two-wheeled vehicle having a V-belt transmission mechanism and a reduction gear mechanism interposed between the motor of the vehicle and the rear driven ground wheel of the vehicle, a reduction gear mechanism cover, and a V-belt transmission cover. The reduction gear mechanism, comprising the wheel axle, an input shaft and a gear train connecting the axle and the input shaft, is covered by the reduction gear mechanism cover. The V-belt transmission' comprising a pulley on the input shaft externally of the reduction gear mechanism cover, a pulley on an output shaft of the motor and a V-belt running around these two pulleys, is covered by the V-belt transmission cover. In French Patent Specification No. 2 335 395 there is disclosed a similar vehicle, but in this vehicle a single cover serves as the reduction gear mechanism cover and the V-belt transmission cover.

In German Patent Specification No. 1 036 083 there is disclosed a motorized two-wheeled vehicle having a V-belt transmission mechanism and a reduction gear mechanism interposed between the motor of the vehicle and the rear driven ground wheel of the vehicle, the vehicle having a main casing body extending from one side of the motor of the vehicle rearwardly of the vehicle and rotatably supporting a wheel axle of the rear ground wheel, a reduction gear mechanism cover fitted to a rear portion of the casing body so as to contain with the casing body a gear train of the reduction gear mechanism, and a V-belt transmission mechanism cover fitted in fluid-tight manner to the casing body and covering the V-belt transmission mechanism which comprises a pulley connected to the input shaft of the reduction gear mechanism, a pulley on an output shaft of the motor and a V-belt running around these two pulleys. In this vehicle the main casing body has a front casing section, a rear casing section and a side wall extending in the longitudinal direction of this body; part of the rear casing section contains, in conjunction with the reduction gear mechanism cover, the reduction gear mechanism; the V-belt transmission mechanism cover serves to form, with the main casing body, a dry chamber; and the main casing body has at its front casing section a motor-casing fast therewith, and constitutes a swingable power unit that includes the reduction gear mechanism cover and the V-belt transmission mechanism cover.

According to the present invention there is provided a motorized two-wheeled vehicle having a V-belt transmission mechanism and a reduction gear mechanism interposed between the motor of the vehicle and the rear driven ground wheel of the vehicle, a main casing body extending from one side of the motor of the vehicle rearwardly of the vehicle and rotatably supporting a wheel axle of the rear ground wheel, a reduction gear mechanism cover fitted to a rear portion of the casing body in a fluid-tight manner and so as to contain with the casing body a gear train of the reduction gear mechanism, and a V-belt transmission mechanism cover fitted in fluid-tight manner to the casing body and covering the V-belt transmission mechanism which comprises a pulley connected to the input shaft of the reduction gear mechanism, a pulley on an output shaft of the motor and a V-belt running around these two pulleys; the main casing body having a front casing section, a rear casing section and a side wall extending in the longitudinal direction of this body; part of the rear casing section containing, in conjunction with the reduction gear mechanism cover, the reduction gear mechanism; the V-belt transmission mechanism cover serving to form, with the main casing body a dry chamber; and the main casing body having at its front casing section a motor-casing fast therewith, and constituting a swingable power unit that includes the reduction gear mechanism cover and the V-belt transmission mechanism cover; characterised in that:

the reduction gear mechanism cover covers said.

part of the rear casing section and serves to form, with said part of the rear casing section, a wet chamber containing lubricating oil,

the V-belt transmission mechanism cover and the reduction gear mechanism cover are disposed on the same side of the main casing body, this being the side opposite the rear ground wheel and the motor,

the pulley connected to the input shaft of the reduction gear mechanism is provided at an outside portion of the reduction gear mechanism that is covered by the V-belt transmission cover, and

a centrifugal clutch mechanism is disposed in the region of the rear of the casing main body positioned on the opposite side of the V-belt relative to the reduction gear mechanism. In this vehicle maintenance of the reduction gear mechanism and of the V-belt transmission mechanism can be carried out from one side by detaching the respective covers, and thus such maintenance is facilitated. The contact surfaces of the main casing body for the respective covers are enough with those disposed on one side, and thus the workability thereof is improved. It is advantageous that the liquid-tight chamber and the air-tight chamber are formed by the main casing body and the respective covers since the reduction gear mechanism may thereby be kept always in a good lubricating condition and the transmission mechanism may be kept effective in function. It is also advantageous that the centrifugal clutch mechanism is disposed in the region of the rear of the casing main body since thereby the front side portion of the power unit can be small in width and the driver's foot landing can be improved.

For a better understanding of the invention and to show how the same may be carried into effect, reference will now be made, by way of example, to the accompanying drawings, in which:-

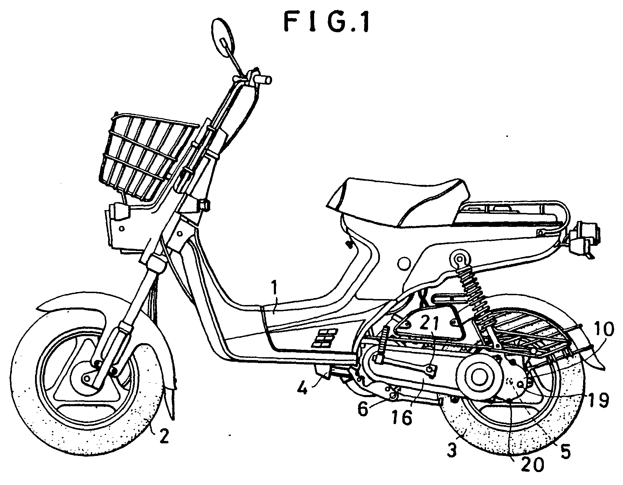

Figure 1 is a side view of a motorized two-wheel vehicle,

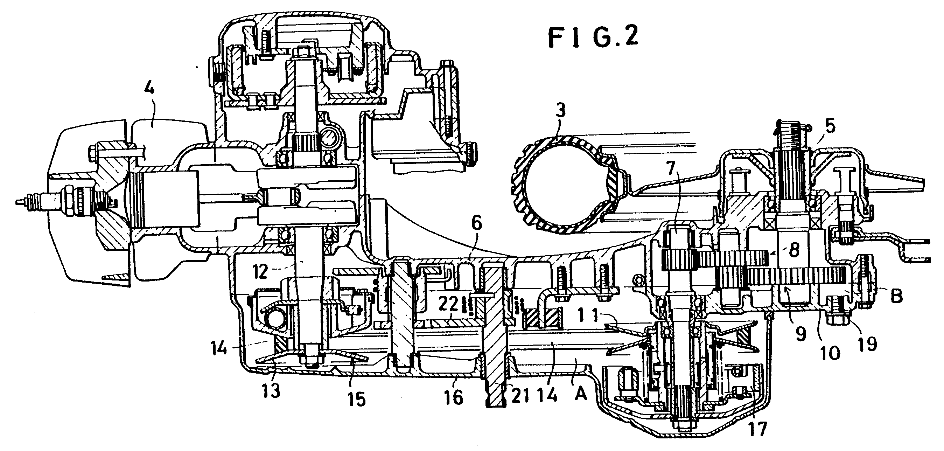

Figure 2 is a sectional plan view of part of the vehicle of Figure 1, drawn to a larger scale, and

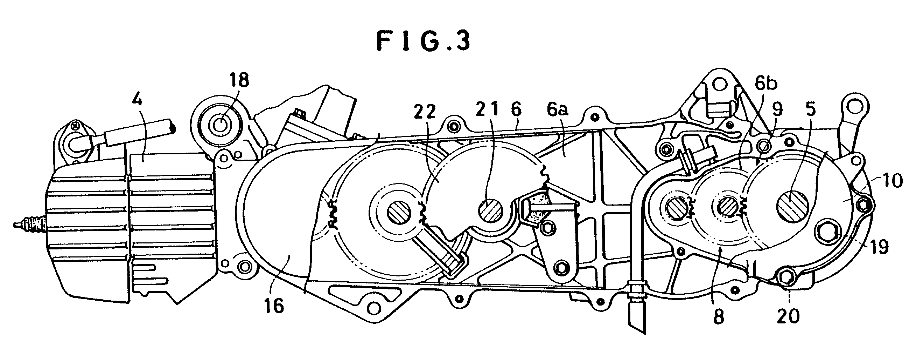

Figure 3 is a side view, also to a larger scale, of part of the vehicle.

Referring to the drawings, numeral 1 denotes a vehicle body of a motorcycle or similar motorised vehicle, numeral 2 denotes the front ground wheel of the motorcycle numeral 3 denotes the rear ground wheel of the motorcycle, and numeral 4 denotes the motor which is an internal combustion engine interposed between the two ground wheels. A main casing body 6 extends laterally of the vehicle body from one side of the motor 4 to the same side of the rear wheel 3 so as to form a rearwardly extending rigid frame which rotatably supports a wheel axle 5 of the rear wheel 3. This main body 6 is partitioned in its interior into a front casing section 6a and a rear casing section 6b. The rear casing section 6b has fitted to it in fluid-tight manner a reduction gear mechanism cover 10 so as to form a reduction gear mechanism chamber B. The front casing section 6a has fitted to it a V-belt transmission cover 16 so as to form a V-belt transmission chamber A. The covers 10 and 16 are on the same side, this being the side opposite the rear ground wheel 3 and the motor 4.

The chamber B contains a reduction gear mechanism 9 which is thus contained by the rear casing section 6b in conjunction with the cover 10, and which comprises the wheel axle 5, an input shaft 7 forward of the wheel axle 5 and a gear train 8 interconnecting the shaft 7 and the axle 5. The part of the rear casing section 6b that contains the reduction gear mechanism 9 is covered by the reduction gear mechanism 10. The chamber B is charged with lubricating oil.

The chamber A, formed by the V-belt transmission mechanism cover 16 and the main casing body 6, is a dry chamber and contains a V-belt transmission 15 comprising a pulley 11 mounted on a portion of the input shaft 7 protruding through the cover 10, a pulley 13 mounted on the output shaft 12 of the engine 4 and located in front of the input shaft 7 and a V-belt 14 running around the two pulleys 11, 13. Thus, the main casing body 6 together with the covers 10 and 16 constitutes an assembly unit which contains in its rear section the reduction gear mechanism 9, which is of wet type, and in its front section the V-belt transmission 15, which is of dry type, in such an arrangement that the mechanism 9 is close to the rear wheel 3 and the transmission 15 is located outboard of the mechanism 9.

Numeral 17 denotes an automatic centrifugal clutch mechanism provided on an outer end of the input shaft 7, and hence in the region of the rear of the casing main body 6, this clutch mechanism being positioned on the opposite side of the V-belt 14 relative to the reduction gear mechanism 9.

The main casing body 6 is fast, at its front casing section 6a, with the side surface of the motor casing so as to constitute with the motor a power unit which is swingably attached to the side of the vehicle body 1 through a pivot 18 provided at the front upper end portion of the body 6, this power unit including the reduction gear mechanism cover 10 and the V-belt transmission cover 16.

The reduction gear mechanism cover 10 has a portion extending rearwards beyond the rear end of the V-belt transmission cover 16, and is provided at this extended portion with an oil filler opening 19 and an oil drain opening 20 whereby the lubricating oil in the chamber B can be changed without detaching the V-belt transmission cover 16. The V-belt 14 can be changed simply by detaching the cover 16 alone.

The main casing body 6 is so formed that its surface to which the cover 10 is applied is coplanar with its surface to which the cover 16 is applied, so that these two surfaces can be worked, for instance, by a milling cutter and the workability thereof is facilitated.

The main casing body 6 and the V-belt transmission cover 16 are placed in direct contact without using any interposed packing or the like therebetween and are screwthreadly joined together by bolts or the like, and thereby the cover 16 can serve as a reinforcing member so as to increase the rigidity of the main body 6.

Numeral 21 denotes a kick shaft, at the front casing section 6a, for starting the motor 4 and numeral 22 denotes a starter gear train (also at the front casing section 6a) extending from the kick shaft 21.

Operation is as follows:-

The output of the motor 4 is transmitted through the V-belt transmission 15 and the reduction gear mechanism 9 to the rear wheel 3, so that the vehicle is driven to run. As the transmission 15 and the gear mechanism 9 are contained in the single common covered main casing body 6 in front and rear relationship, overall size is minimised. Additionally, as the cover 10 for the reduction gear mechanism 9 is fitted to the body 6 in fluid-tight manner, and therefore lubricating oil can be held therein, the mechanism 9 is always maintained in a good lubricated condition.

## Claims

1. A motorized two-wheeled vehicle having a V-belt transmission mechanism (15) an a reduction gear mechanism (9) interposed between the motor (4) of the vehicle and the rear driven ground wheel (3) of the vehicle, a main casing body (6) extending from one side of the motor (4) of the vehicle rearwardly of the vehicle and rotatably supporting a wheel axle (5) of the rear ground wheel, a reduction gear mechanism cover (10) fitted to a rear portion of the casing body so as to contain with the casing body a gear train (8) of the reduction gear mechanism, and a V-belt transmission mechanism cover (16) fitted in fluid-tight manner to the casing body and covering the V-belt transmission mechanism which comprises a pulley (11) connected to the input shaft (7) of the reduction gear mechanism (9), a pulley (13) on an output shaft (12) of the motor (4) and a V-belt (14) running around these two pulleys (11, 13); the main casing body having a front casing section (6a), a rear casing section (6b) and a side wall extending in the longitudinal direction of this body; part of the rear casing section (6b) containing, in conjunction with the reduction gear mechanism cover (10), the reduction gear mechanism (9); the V-belt transmission mechanism cover (16) serving to form, with the main casing body (6) a dry chamber (A); and the main casing body (6) having at its front casing section (6a) a motor-casing fast therewith, and constituting a swingable power unit that includes the reduction gear mechanism cover (10) and the V-belt transmission mechanism cover (16); characterised in that:

the reduction gear mechanism cover (10) covers said part of the rear casing section (6b) and serves to form, with said part of the rear casing section, a wet chamber (B) containing lubricating oil,

the V-belt transmission mechanism cover (16) and the reduction gear mechanism cover (10) are disposed on the same side of the main casing body (6), this being the side opposite the rear ground wheel (3) and the motor (4),

the pulley (11) connected to the input shaft (7) of the reduction gear mechanism (9) is provided at an outside portion of the reduction gear mechanism (9) that is covered by the V-belt transmission cover (16), and

a centrifugal clutch mechanism (17) is disposed in the region of the rear of the casing main body (6) positioned on the opposite side of the V-belt (14) relative to the reduction gear mechanism (9).

2. A vehicle as claimed in claim 1, wherein the reduction gear mechanism cover (10) has a portion extending rearwards beyond the V-belt transmission cover (16) and provided with oil filler and drain openings (19, 20).

3. A vehicle as claimed in claim 1 or 2, wherein the V-belt transmission cover (16) is applied directly to the main casing body (6) without interposed packing.

4. A vehicle as claimed in any one of the preceding claims, wherein said side wall of the main casing body (6) is planar.

5. A vehicle as claimed in any one of the preceding claims, wherein a kick shaft (21) and a starting gear train (22) are disposed at the front casing section (6a) of the main casing body (6).

## Patentansprüche

1. Zweirädriges Motorfahrzeug mit zwischen dem Motor (4) des Fahrzeugs und dem angetriebenen Hinterrad (3) angeordneten Keilriemenantrieb (15) und Untersetzungsgetriebe (9), einem sich von einer Seite des Motors (4) des Fahrzeugs nach hinten erstreckenden und eine Radachse (5) des Hinterrades drehbar abstützenden Gehäusehauptteil (6), einer an einem Rückteil des Gehäusekörpers angeschlossenen und zusammen mit dem Gehäusekörper einen Getrieberadsatz (8) des Untersetzungsgetriebes aufnehmenden Untersetzungsgetriebeabdeckung (10) und einer am Gehäusekörper flüssigkeitsdicht angeschlossenen und den Keilriemenantrieb abdeckenden Keilriemenantriebsabdeckung (16), welcher Keilriemenantrieb eine mit der Eingangswelle (7) des Untersetzungsgetriebes (9) verbundene Riemenscheibe (11) besitzt, einer Riemenscheibe (13) an der Ausgangswelle (12) des Motors (4) und einem über diese zwei Riemenscheiben (11, 13) laufenden Keilriemen (14), wobei der Gehäusehauptteil einen vorderen Gehäuseabschnitt (6a), einen hinteren Gehäuseabschnitt (6b) und eine sich in Längsrichtung des Gehäusehauptteils erstreckende Seitenwand aufweist, ein Teil des hinteren Gehäuseabschnittes (6b) zusammen mit der Untersetzungsgetriebeabdeckung (10) das Untersetzungsgetriebe (9) aufnimmt, die Keilriemenantriebsabdeckung (16) zusammen mit dem Gehäusehauptteil (6) eine Trockenkammer (A) bildet, der Gehäusehauptteil (6) an seinem vorderen Gehäuseabschnitt (6a) ein damit fest verbundenes Motorgehäuse trägt und eine die Untersetzungsgetriebeabdeckung (10) und die Keilriemenantriebsabdeckung (16) einschließende schwingfähige Antriebseinheit bildet, dadurch gekennzeichnet,

daß die Untersetzungsgetriebeabdeckung (10) den erwähnten Teil des hinteren Gehäuseabschnittes (6b) abdeckt und zusammen mit diesem Teil des hinteren Gehäuseabschnittes eine Schmieröl enthaltende Feuchtkammer (B) bildet, die Keilriemenantriebsabdeckung (16) und die Untersetzungsgetriebeabdeckung (10) an der gleichen Seite des Gehäusehauptteils, u.zw. an der gegenüberliegenden Seite des Hinterrades (3) und des Motors (4), angeordnet sind,

die mit der Eingangswelle (7) des Untersetzungsgetriebes (9) verbundene Riemenscheibe (11) an einem von der Keilriemenantriebsabdeckung (16) abgedeckten äußeren Teil des Untersetzungsgetriebes (9) vorgesehen ist und im Bereiche der Rückseite des Gehäusehauptteils (6) eine Fliehkraftkupplung (17) an der dem Untersetzungsgetriebe (9) gegenüberliegende Seite des Keilriemens (14) vorgesehen ist.

2. Fahrzeug nach Anspruch 1, worin die Untersetzungsgetriebeabdeckung (10) einen sich nach hinten über die Keilriemenantriebsabdeckung (16) hinaus erstreckenden Abschnitt aufweist, der mit Öleinfüll- und entleeröffnungen (19,20) ausgestattet ist.

3. Fahrzeug nach Anspruch 1 und 2, worin die Keilriemenantriebsabdeckung (16) ohne Zwischenschaltung von Dichtmaterial direkt an den Gehäusehauptteil (6) angelegt ist.

4. Fahrzeug nach irgendeinem der vorhergehenden Ansprüche, worin die Seitenwand des Gehäusehauptteils (6) eben ist.

5. Fahrzeug nach irgendeinem dervorhergehenden Ansprüche, worin eine Fußstarterwelle (21) und ein Startgetrieberadsatz (22) am vorderen Gehäuseabschnitt (6a) des Gehäusehauptteils (6) angeordnet sind.

**Revendications**

1. Véhicule à moteur à deux roues comportant un mécanisme de transmission à courroie trapézoïdale (15) et un mécanisme d'engrenage réducteur (9) interposé entre le moteur (4) du véhicule et la roue menée arrière (3) du véhicule, un corps de carter principal (6) s'étendant depuis un côté du moteur (4) du véhicule vers liarrière du véhicule et supportant de façon rotative un axe de roue (5) de la roue arrière, un carter de mécanisme d'engrenage réducteur (10) fixé à une partie arriére du corps de carter de façon à contenir avec le corps de carter un train d'engrenages (8) du mécanisme diengrenage réducteur, et un carter de mécanisme de transmission à courroie trapézoïdale (16) fixé de manière étanche aux fluides au corps de carter et couvrant le mécanisme de transmission à courroie trapézoïdale qui comprend une poulie (11) reliée à l'arbre dientrée (7) du mécanisme d'engrenage réducteur (9), une poulie (13) montée sur un arbre de sortie (12) du moteur (4) et une courroie trapézoïdale (14) contournant ces deux poulies (11, 13); le corps de carter principal présentant une section de carter avant (6a), une section de carter arrière (6b) et une paroi latérale s'étendant suivant la direction longitudinale de ce corps; une partie de la section de carter arrière (6b) contenant, conjointement avec le carter de mécanisme d'engrenage réducteur (10), le mécanisme d'engrenage réducteur (9); le carter de mécanisme de transmission à courroie trapézoïdale (16) servant à définir, avec le corps de carter principal (6), une chambre sèche (A); et le corps de carter principal (6) présentant à sa section de carter avant (6a) un carter de moteur faisant corps avec lui, et constituant un bloc moteur oscillant qui comporte le carter de mécanisme d'engrenage réducteur (10) et le carter de mécanisme de transmission à courroie trapézoïdale (16); caractérisé en ce que:

le carter de mécanisme d'engrenage réducteur (10) couvre ladite partie de la section de carter arrière (6b) et sert à définir, avec ladite partie de la section de carter arrière, une chambre humide (B) contenant de l'huile lubrifiante,

le carter de mécanisme de transmission à courroie trapézoïdale (16) et le carter de mécanisme d'engrenage réducteur (10) sont disposés du même côté du corps de carter principal (6), ce côté étant celui opposé à la roue arrière (3) et au moteur (4),

la poulie (11) reliée à l'arbre d'entrée (7) du mécanisme d'engrenage réducteur (9) est prévue à une partie extérieure du mécanisme d'engrenage réducteur (9) qui est couverte par le carter de transmission à courroie trapézoïdale (16), et

un mécanisme d'embrayage centrifuge (17) est disposé dans la région de l'arrière du corps principal de carter (6) située du côté de la courroie trapézoïdale (14) opposé au mécanisme d'engrenage réducteur (9).

2. Véhicule selon la revendication 1, dans lequel le carter de mécanisme d'engrenage réducteur (10) comporte une partie s'étendant vers l'arriére au-delà du carter de transmission à courroie trapézoïdale (16) et présentant des trous de remplissage et de vidange d'huile (19, 20).

3. Véhicule selon la revendication 1 ou 2, dans lequel le carter de transmission à courroie trépé-zoïdale (16) est appliqué directement sur le corps de carter principal (6) sans interposition de garniture d'étanchéité.

4. Véhicule selon l'une quelconque des revendications précédentes, dans lequel ladite paroi latérale du corps de carter principal (6) est plane.

5. Véhicule selon l'une quelconque des revendications précédentes, dans lequel un arbre de mise en marche (21) et un train d'engrenages de démarrage (22) sont disposés à la section de carter avant (6a) du corps de carter principal (6).

# F I G .1

F I G. 2

**F I G . 3**